# FASCICULE DE BREVET EUROPEEN

(11) **EP 4 135 889 B1**
(45) Date de publication et mention de la délivrance du brevet: **20.03.2024**
(21) Numéro de dépôt: 21726152.8
(22) Date de dépôt: 13.04.2021
(51) Int. Cl.: B01J 19/18, B01J 19/00, A61L 27/06, C08F 292/00

(54) **STATION DE POLYMERISATION POUR GREFFAGE D'UN REVETEMENT BIOACTIF**
POLYMERISATIONSSTATION ZUR PFROPFUNG EINER BIOAKTIVEN BESCHICHTUNG
POLYMERISATION STATION FOR GRAFTING A BIOACTIVE COATING

(30) Priorité: 14.04.2020 FR 2003717
(43) Date de publication de la demande: 22.02.2023
(73) Titulaire: Activ' Biomat, 95957 Roissy Aeroport CDG (FR)
(72) Inventeur: BLANQUAERT, Daniel, 75008 PARIS (FR); LEROUX, Amélie, 95120 ERMONT (FR); MIGONNEY, Véronique, 95600 EAUBONNE (FR)
(74) Mandataire: CAPRI
(86) Numéro de dépôt international: PCT/FR2021/050645
(87) Numéro de publication internationale: WO 2021/209710

(56) Documents cités:
- WO-A1-2005/003185
- WO-A1-2011/038483
- WO-A1-2017/068272
- US-A1- 2005 229 323

## Description

La présente invention concerne une station de polymérisation et un procédé pour greffer un polymère bioactif, tel que du PolyNaSS, sur un article, notamment polymérique ou céramique. La station de polymérisation comprend un réacteur comprenant une cuve destinée à accueillir les articles en vue de leur oxydation et greffage, un couvercle monté de manière étanche sur la cuve, une entrée pour remplir au moins partiellement la cuve afin d'immerger les articles et une sortie d'évacuation pour vidanger la cuve.

Ce type de réacteur est connu de l'art antérieur, notamment pour réaliser des expériences, type synthèse, en laboratoire à petite et moyenne échelle.

Le but de l'invention est de réaliser l'oxydation et le greffage à échelle industrielle, c'est-à-dire de manière répétable et garantie en grande masse et à cadence rapide, ce qui n'est pas le cas en laboratoire. US2005/229323 décrit un procédé utilisant des réacteurs dans une station de polymérisation pour greffer un polymère bioactif.

Pour ce faire, l'invention propose un procédé d'oxydation et de greffage pour greffer un polymère bioactif, tel que du PolyNaSS, sur un article, notamment polymérique ou céramique, le procédé comprenant une étape d'oxydation par ozonation et une étape de greffage par polymérisation radicalaire dans une station de polymérisation comprenant un premier réacteur, le procédé étant caractérisé en ce que les deux étapes d'oxydation et de greffage sont réalisées de manière consécutive dans des solutions différentes dans le réacteur de la station de polymérisation.

Selon un mode de réalisation de l'invention, le premier réacteur comprend une première cuve destinée à accueillir les articles en vue de leur oxydation et greffage, un premier couvercle monté de manière étanche sur la première cuve, une entrée pour remplir au moins partiellement la première cuve afin d'immerger les articles, une première sortie de vidange pour vidanger la première cuve, une entrée d'ozone pour créer un bullage d'ozone dans la première cuve dans le but d'oxyder la surface des articles immergés dans l'eau, et une entrée de solution de monomère pour remplir au moins partiellement la première cuve en solution de monomère, afin d'immerger les articles dans la solution de monomère.

Selon une caractéristique très intéressante de l'invention, l'étape de greffage par polymérisation comprend la préparation d'une solution aqueuse de monomère dans un second réacteur de la station de polymérisation raccordé en série en amont du premier réacteur, afin de pouvoir transvaser la solution de monomère du second réacteur dans le premier réacteur. Les deux réacteurs peuvent être maintenus en surpression par injection d'un gaz inerte, tel que de l'argon. Avantageusement, l'étape d'oxydation par ozonation comprend de remplir au moins partiellement le premier réacteur avec de l'eau en provenance du second réacteur. De préférence, la première cuve comprend une première double paroi de manière à définir un circuit périphérique pour la circulation d'un fluide caloporteur, tel que de l'huile, dans le but de chauffer le contenu de la première cuve à une température prédéterminée.

Selon un mode de réalisation pratique, le second réacteur peut comprendre une seconde cuve destinée à être remplie au moins partiellement avec une solution de monomère, un second couvercle monté de manière étanche sur la seconde cuve, une seconde sortie de vidange reliée à l'entrée de solution de monomère du premier réacteur pour vidanger la solution de monomère du second réacteur dans le premier réacteur. Avantageusement, la seconde cuve peut comprendre une seconde double paroi de manière à définir un circuit périphérique pour la circulation d'un fluide caloporteur, tel que de l'huile, dans le but de chauffer la solution de monomère de la seconde cuve à une température prédéterminée.

L'esprit de l'invention réside dans le fait que les étapes d'oxydation et de greffage sont réalisées dans un même réacteur. La mise en oeuvre d'un second réacteur spécialement dédié à la préparation de la solution de monomère permet de séquencer dans le temps les deux étapes d'oxydation et de greffage, à savoir d'abord l'oxydation par ozonation, puis le greffage par polymérisation. La préparation de la solution de monomère dans le second réacteur permet également de réduire la durée totale du traitement, étant donné que la solution de monomère peut être préparée et chauffée à la température appropriée pendant l'étape d'oxydation. Ainsi, la solution de monomère est amenée dans le premier réacteur dans des conditions optimales « prêt à l'emploi ».

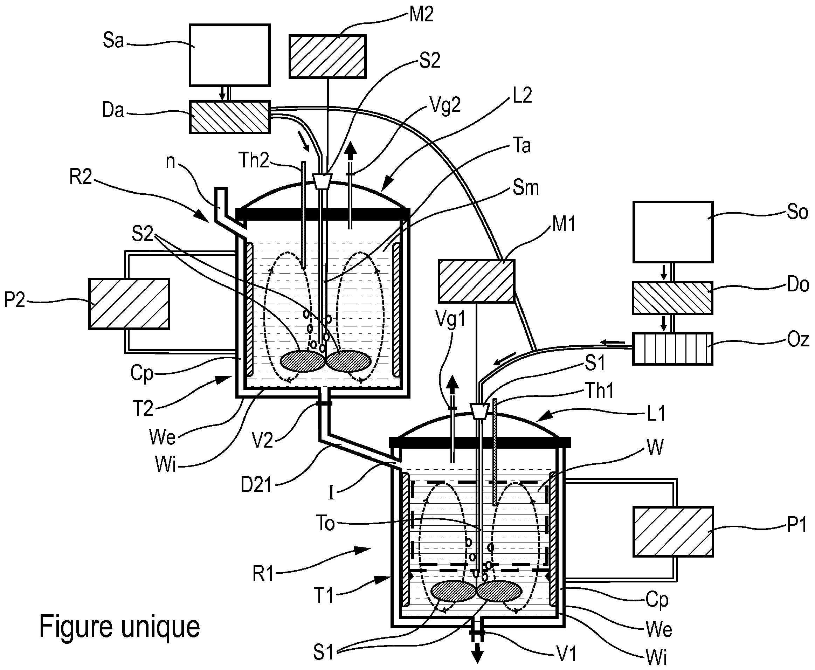

L'invention sera maintenant plus amplement décrite en référence au dessin unique joint, illustrant à titre d'exemple non limitatif, une station de polymérisation industrielle permettant de mettre en oeuvre le procédé de l'invention.

La Figure unique est une vue schématique représentant une station de polymérisation industrielle de l'invention. Cette station comprend deux réacteurs R1 et R2 qui peuvent être identiques ou similaires, mais dont l'usage est différent.

Le premier réacteur R1 comprend une première cuve T1 destinée à accueillir les articles en vue de leur oxydation et de leur greffage. Les articles sont de préférence polymériques ou céramiques : il peut par exemple s'agir d'un matériau textile non tissé en fibres de polymère, tel que la polycaprolactone PCL. Il peut également s'agir d'un substrat céramique, qui peut comprendre ou être constitué de phosphate tricalcique, et plus particulièrement de phosphate tricalcique β (β-TCP). Ce ne sont que des exemples non limitatifs.

La première cuve T1 comprend une entrée I pour la remplir au moins partiellement d'eau ou d'une solution de monomère Sm afin d'immerger les articles. La première cuve T1 comprend aussi une première sortie de vidange (V1) pour la vidanger de son contenu, à savoir de l'eau ozonée ou de la solution de monomère usagée, comme on le verra ci-après.

La première cuve T1 comprend une première double paroi Wi, We, de manière à définir un circuit périphérique Cp pour la circulation d'un fluide caloporteur, tel que de l'huile, dans le but de chauffer le contenu de la première cuve T1 à une température prédéterminée. Le fluide caloporteur est mis en circulation au moyen d'une première pompe externe P1 et monté en température par des moyens de chauffage non représentés.

La première cuve T1 contient un agitateur S1 qui est actionné par un moteur externe M1. L'agitateur S1 a pour but de mélanger le contenu de la première cuve T1.

Le premier réacteur R1 comprend également un premier couvercle L1 monté de manière étanche sur la première cuve T1. Le couvercle L1 est amovible pour accéder à l'intérieur de la première cuve T1, afin de pouvoir y placer les articles à greffer et les récupérer, une fois le greffage réalisé. Le premier couvercle L1 est pourvue d'une entrée d'ozone To pour créer un bullage d'ozone dans la première cuve T1 dans le but d'oxyder la surface des articles immergés dans l'eau. L'entrée d'ozone To se présente sous la forme d'un tube qui traverse le premier couvercle L1 au niveau d'un joint S1 et s'étend vers le fond de la première cuve T1. Ainsi, ce tube permet d'injecter de l'ozone dans la première cuve T1, lorsqu'elle est remplie (partiellement ou totalement) d'eau. Le tube est relié par un tuyau à un ozonateur Oz, lui-même relié à une source de dioxygène So via un débitmètre Do. Le premier couvercle L1 est également équipé d'un premier thermomètre Th1 et d'une première soupape de gaz Vg. Il est à noter que l'entrée d'ozone To peut également être reliée à une source de gaz inerte Sa (argon par exemple) par un débitmètre Da. Le couvercle L1 peut également permettre l'introduction de tuyaux reliés à un appareil de mesure continu du taux d'ozone de la cuve T1.

Le second réacteur R2 comprend une seconde cuve T2 qui comprend une entrée Im pour la remplir au moins partiellement soit d'eau et de poudre de monomère pour créer une solution de monomère Sm, soit d'une solution de monomère Sm. La seconde cuve T2 comprend aussi une seconde sortie de vidange V2 pour la vidanger de son contenu, à savoir la solution de monomère prête à l'emploi, comme on le verra ci-après.

La seconde cuve T2 comprend une seconde double paroi Wi, We, de manière à définir un circuit périphérique Cp pour la circulation d'un fluide caloporteur, tel que de l'huile, dans le but de chauffer le contenu de la seconde cuve T2 à une température prédéterminée. Le fluide caloporteur est mis en circulation au moyen d'une seconde pompe externe P2 et monté en température par des moyens de chauffage non représentés.

La seconde cuve T2 contient un second agitateur S2 qui est actionné par un second moteur externe M2. Le second agitateur S2 a pour but de dissoudre la poudre de monomère dans l'eau dans la seconde cuve T2 de manière homogène.

Le second réacteur R2 comprend également un second couvercle L2 monté de manière étanche sur la seconde cuve T2. Le second couvercle L2 est de préférence amovible pour accéder à l'intérieur de la seconde cuve T2. Le second couvercle L2 est pourvue d'une entrée de gaz inerte Ta. L'entrée Ta se présente sous la forme d'un tube qui traverse le second couvercle L2 au niveau d'un joint S2 et s'étend avantageusement vers le fond de la seconde cuve T2. Ainsi, ce tube Ta permet d'injecter un gaz inerte, tel que de l'argon dans la seconde cuve T2, lorsqu'elle est remplie (partiellement ou totalement) de solution de monomère Sm. Le tube est relié par un tuyau à la source de gaz inerte Sa (argon par exemple) via le débitmètre Da. On peut remarquer que la source de gaz inerte Sa et le débitmètre Da peuvent être communs aux deux réacteurs R1 et R2.

Selon l'invention, la seconde sortie de vidange V2 du second réacteur R2 est raccordée en série à l'entrée I du premier réacteur R1 par un conduit D21, de sorte que le contenu (solution de monomère Sm) de la seconde cuve T2 peut être déversé ou transféré dans la première cuve T1. Ainsi, la solution de monomère Sm préparée et chauffée dans le second réacteur R2 peut remplir la première cuve T1, où elle peut être maintenue à la même température, laissée refroidir ou encore chauffée.

Le transfert de la solution de monomère Sm se fait préférentiellement après avoir vidangé l'eau ozonée de la première cuve T1. Dans l'ordre de traitement, la surface des articles est d'abord oxydée par ozonation, puis ensuite revêtue de polymère bioactif, tel que du PolyNaSS, par greffage radicalaire. Par conséquent, les articles sont d'abord immergés dans de l'eau qui va être ozonée par bullage d'ozone pour réaliser l'oxydation de surface, puis ensuite immergés dans la solution de monomère Sm en provenance du second réacteur R2 pour réaliser le greffage par polymérisation radicalaire. Les articles sont donc consécutivement oxydés et greffés dans un seul et même réacteur, à savoir le premier réacteur R1 : le second réacteur R2 ne servant qu'à préparer la solution de monomère Sm par mélange et chauffage pour être transférée dans un état « prêt à l'emploi » dans la première cuve T1. On garantit de ce fait qu'il n'y aura pas d'autres substances dans le réacteur R2 que de l'eau et de la poudre de monomère. De plus, la durée du traitement est considérablement réduite, étant donné que l'étape d'oxydation et l'étape de préparation de la solution de monomère Sm peuvent être conduites de manière simultanée et que c'est la solution Sm qui est transférée au contact des articles et non l'inverse.

Par ailleurs, il est avisé de maintenir le premier réacteur R1, et avantageusement aussi le second réacteur R2, en légère surpression, en y injectant un gaz inerte, tel que l'argon, au moyen de la source Sa et des tubes To et Ta.

De plus, l'eau peut être introduite dans le premier réacteur R1 par n'importe quel moyen et de préférence par l'entrée I qui reçoit l'eau du second réacteur R2.

Les durées et les températures des opérations d'oxydation, de préparation de la solution de monomère Sm et de greffage dépendent de l'article à traiter et du taux de greffage souhaité. A titre indicatif, la température de la solution de monomère Sm dans le second réacteur R2 peut être de l'ordre de 40 à 80°C et la température de l'eau ozonée dans le premier réacteur R1 peut être de l'ordre de 20 à 40°C.

Grâce à l'invention, on peut oxyder et greffer industriellement des articles dans un seul et même réacteur R1. Avantageusement, on peut réduire la durée du traitement, tout en le maitrisant parfaitement, en préparant la solution de monomère Sm dans un second réacteur dédié R2 montée en amont du premier réacteur R1.

## Revendications

1. Procédé d'oxydation et de greffage pour greffer un polymère bioactif, tel que du PolyNaSS, sur un article, notamment polymérique ou céramique, le procédé comprenant une étape d'oxydation par ozonation et une étape de greffage par polymérisation radicalaire dans une station de polymérisation comprenant un premier réacteur (R1),
le procédé étant **caractérisé en ce que** les deux étapes d'oxydation et de greffage sont réalisées de manière consécutive dans des solutions différentes dans le réacteur (R1) de la station de polymérisation.

2. Procédé selon la revendication 1, dans lequel le premier réacteur (R1) comprend :
- une première cuve (T1) destinée à accueillir les articles en vue de leur oxydation et greffage,
- un premier couvercle (L1) monté de manière étanche sur la première cuve (T1),
- une entrée (I) pour remplir au moins partiellement la première cuve (T1) afin d'immerger les articles, et
- une première sortie de vidange (V1) pour vidanger la première cuve (T1),
- une entrée d'ozone (To) pour créer un bullage d'ozone dans la première cuve (T1) dans le but d'oxyder la surface des articles immergés dans l'eau, et
- une entrée de solution de monomère (I) pour remplir au moins partiellement la première cuve (T1) en solution de monomère (Sm) afin d'immerger les articles dans la solution de monomère (Sm).

3. Procédé selon la revendication 1, dans lequel l'étape de greffage par polymérisation comprend la préparation d'une solution aqueuse de monomère dans un second réacteur (R2) de la station de polymérisation raccordé en série en amont du premier réacteur (R1), afin de pouvoir transvaser la solution de monomère (Sm) du second réacteur (R2) dans le premier réacteur (R1).

4. Procédé selon la revendication 3, dans lequel les deux réacteurs (R1, R2) sont maintenus en surpression par injection d'un gaz inerte, tel que de l'argon.

5. Procédé selon l'une quelconque des revendications précédentes, dans lequel l'étape d'oxydation par ozonation comprend de remplir au moins partiellement le premier réacteur (R1) avec de l'eau en provenance du second réacteur (R2).

6. Procédé selon l'une quelconque des revendications précédentes, dans laquelle la première cuve (T1) comprend une première double paroi (Wi, We) de manière à définir un circuit périphérique (Cp) pour la circulation d'un fluide caloporteur, tel que de l'huile, dans le but de chauffer le contenu de la première cuve (T1) à une température prédéterminée.

7. Procédé selon la revendication 3, dans laquelle le second réacteur (R2) comprend :
- une seconde cuve (T2) destinée à être remplie au moins partiellement avec une solution de monomère (Sm),
- un second couvercle (L2) monté de manière étanche sur la seconde cuve (T2),
- une seconde sortie de vidange (V2) reliée à l'entrée de solution de monomère (I) du premier réacteur (R1) pour vidanger la solution de monomère (Sm) du second réacteur (R2) dans le premier réacteur (R1).

8. Procédé selon la revendication 7, dans laquelle la seconde cuve (T2) comprend une seconde double paroi (Wi, We) de manière à définir un circuit périphérique (Cp) pour la circulation d'un fluide caloporteur, tel que de l'huile, dans le but de chauffer la solution de monomère (Sm) de la seconde cuve (T2) à une température prédéterminée.

## Patentansprüche

1. Oxidations- und Pfropfverfahren für die Pfropfung eines bioaktiven Polymers, beispielsweise PolyNaSS, auf einen Gegenstand, insbesondere auf einen polymeren oder keramischen Gegenstand, wobei das Verfahren einen Schritt der Oxidation durch Ozonisierung und einen Pfropfschritt durch radikalische Polymerisation in einer Polymerisationsstation mit einem ersten Reaktor (R1) umfasst,
wobei das Verfahren **dadurch gekennzeichnet ist, dass** die zwei Schritte von Oxidation und Pfropfung nacheinander in unterschiedlichen Lösungen in dem Reaktor (R1) der Polymerisationsstation durchgeführt werden.

2. Verfahren nach Anspruch 1, bei dem der erste Reaktor (R1) folgendes umfasst:
- einen ersten Tank (T1) zur Aufnahme der Gegenstände zum Zwecke ihrer Oxidation und Pfropfung,
- einen abdichtend auf dem ersten Tank (T1) angeordneten ersten Deckel (L1),
- einen Zulauf (I) zur zumindest teilweisen Befüllung des ersten Tanks (T1), um die Gegenstände vollständig einzutauchen, und
- einen ersten Ablassauslass (V1) zum Ablassen des ersten Tanks (T1),
- einen Ozoneinlass (To) zur Erzeugung einer Ozonbläschenbildung im ersten Tank (T1) zu dem Zweck der Oxidation der Oberfläche der in Wasser eingetauchten Gegenstände und
- einen Monomerlösungs-Einlass (1) zur zumindest teilweisen Befüllung des ersten Tanks (T1) mit Monomerlösung (Sm), um die Gegenstände vollständig in die Monomerlösung (Sm) einzutauchen.

3. Verfahren nach Anspruch 1, bei dem der Schritt der Pfropfung durch Polymerisation das Herstellen einer wässrigen Monomerlösung in einem zweiten Reaktor (R2) der Polymerisationsstation umfasst, wobei der zweite Reaktor (R2) für die Zwecke einer Überführung der Monomerlösung (Sm) aus dem zweiten Reaktor (R2) in den ersten Reaktor (R1) dem ersten Reaktor (R1) vorgeschaltet ist.

4. Verfahren nach Anspruch 3, bei dem die beiden Reaktoren (R1, R2) durch Einspritzen eines Inertgases, zum Beispiel Argon, unter Überdruck gehalten werden.

5. Verfahren nach einem der vorhergehenden Ansprüche, bei dem der Schritt der Oxidation durch Ozonisierung die zumindest teilweise Befüllung des ersten Reaktors (R1) mit Wasser aus dem zweiten Reaktor (R2) umfasst.

6. Verfahren nach einem der vorhergehenden Ansprüche, bei dem der erste Tank (T1) mit einer ersten Doppelwand (Wi, We) versehen ist, sodass ein periphärer Kreislauf (Cp) für die Zirkulation eines Wärmeträgerfluids, beispielsweise Öl, entsteht, mit dem Ziel, den Inhalt des ersten Tanks (T1) auf eine vorbestimmte Temperatur zu erwärmen.

7. Verfahren nach Anspruch 3, bei dem der zweite Reaktor (R2) folgendes umfasst:
- einen zweiten Tank (T2) zu dessen zumindest teilweiser Befüllung mit Monomerlösung (Sm),
- einen abdichtend auf dem zweiten Tank (T2) angeordneten zweiten Deckel (L2),
- einen mit dem Monomerlösungs-Einlass (1) des ersten Reaktors (R1) verbundenen zweiten Ablassauslass (V2), über den das Ablassen der Monomerlösung (Sm) aus dem zweiten Reaktor (R2) in den ersten Reaktor (R1) erfolgt.

8. Verfahren nach Anspruch 7, bei dem der zweite Tank (T2) mit einer zweiten Doppelwand (Wi, We) versehen ist, sodass ein periphärer Kreislauf (Cp) für die Zirkulation eines Wärmeträgerfluids, beispielsweise Öl, entsteht, mit dem Ziel, die Monomerlösung (Sm) aus dem zweiten Tank (T2) auf eine vorbestimmte Temperatur zu erwärmen.

## Claims

1. An oxidation and grafting method for grafting a bioactive polymer, such as PolyNaSS, onto an article, in particular a polymer or ceramic article, the method comprising a step for oxidation by ozonation and a step for grafting by radical polymerization in a polymerization station comprising a first reactor (R1),
the method being **characterized in that** the two steps for oxidation and grafting are carried out consecutively in different solutions in the reactor (R1) of the polymerization station.

2. The method as claimed in claim 1, in which the first reactor (R1) comprises:
- a first tank (T1) for receiving the articles for their oxidation and grafting,
- a first cover (L1) which is mounted in a fluid-tight manner on the first tank (T1),
- an inlet (I) for at least partially filling the first tank (T1) in order to immerse the articles, and
- a first drain outlet (V1) for draining the first tank (T1),
- an ozone inlet (To) for generating ozone bubbles in the first vessel (T1) with the aim of oxidizing the surface of the articles immersed in the water, and
- a monomer solution inlet (I) for at least partially filling the first vessel (T1) with monomer solution (Sm) in order to immerse the articles in the monomer solution (Sm).

3. The method as claimed in claim 1, in which the step for grafting by polymerization comprises preparing an aqueous solution of monomer in a second reactor (R2) of the polymerization station connected in series upstream of the first reactor (R1) in order to be able to decant the monomer solution (Sm) from the second reactor (R2) into the first reactor (R1).

4. The method as claimed in claim 3, in which the two reactors (R1, R2) are maintained at an overpressure by injecting an inert gas such as argon.

5. The method as claimed in any one of the preceding claims, in which the step for oxidation by ozonation comprises at least partially filling the first reactor (R1) with water deriving from the second reactor (R2).

6. The method as claimed in any one of the preceding claims, in which the first vessel (T1) comprises a first double wall (Wi, We) in a manner such as to define a peripheral circuit (Cp) for circulating a heat transfer fluid, such as oil, with the aim of heating the contents of the first vessel (T1) to a predetermined temperature.

7. The method as claimed in claim 3, in which the second reactor (R2) comprises:
- a second vessel (T2) which is intended to be at least partially filled with a monomer solution (Sm),
- a second cover (L2) which is mounted in a fluid-tight manner on the second vessel (T2),
- a second drain outlet (V2) connected to the monomer solution inlet (I) of the first reactor (R1) in order to drain the monomer solution (Sm) from the second reactor (R2) into the first reactor (R1).

8. The method as claimed in claim 7, in which the second vessel (T2) comprises a second double wall (Wi, We) in a manner such as to define a peripheral circuit (Cp) for the circulation of a heat transfer fluid, such as oil, with the aim of heating the monomer solution (Sm) of the second vessel (T2) to a predetermined temperature.
